Europäisches Patentamt

**European Patent Office**

**Office européen des brevets**

(11) Numéro de publication: **0 291 415 B1**

(19)

## (12) FASCICULE DE BREVET EUROPEEN

(45) Date de publication de fascicule du brevet: **23.12.92**  (51) Int. Cl.⁵: **A23B  4/10**

(21) Numéro de dépôt: **88401166.9**

(22) Date de dépôt: **11.05.88**

(54) **Procédé de préparation de produits alimentaires carnés dans lequel on enrobe le produit prêt à consommer d'un revêtement de finition.**

(30) Priorité: **11.05.87 FR 8706559**

(43) Date de publication de la demande:
**17.11.88 Bulletin  88/46**

(45) Mention de la délivrance du brevet:
**23.12.92 Bulletin  92/52**

(84) Etats contractants désignés:
**AT BE CH DE ES FR GB GR IT LI LU NL SE**

(56) Documents cités:
**BE-A- 461 935**
**FR-A- 1 494 940**
**US-A- 2 337 666**

(73) Titulaire: **CHEVALLIER S.A.**
**1200 avenue de la Houille Blanche**
**F-73000 Chambery(FR)**

(72) Inventeur: **Lespagne, Pierre**
**Le Tremblay**
**F-73290 La Motte Servolex(FR)**
Inventeur: **Truchet, Pierre**
**Chemin de la Grotte des Fées**
**F-73100 Brison Saint-Innocent(FR)**

(74) Mandataire: **Derambure, Christian**
**Cabinet Bouju Derambure (Bugnion) S.A. 55,**
**rue Boissonade**
**F-75014 Paris(FR)**

## Description

L'invention concerne un procédé de préparation d'un produit alimentaire carné tel qu'un jambon sec, fumé, salé ou cuit.

On connaît déjà de longue date, notamment dans le domaine de la charcuterie, des procédés de préparation de produit alimentaire carné de façon traditionnelle et artisanale ou de façon industrielle. Dans ces procédés connus, on fait subir au produit carné une série d'étapes préalables pour le rendre apte à la consommation, puis on le conditionne et on l'emballe pour le protéger et assurer une bonne conservation en attendant sa consommation. Par exemple, pour préparer un jambon de porc, on peut lui faire subir des étapes de malaxage et/ou salage et/ou dessalage et/ou étuvage et/ou séchage et/ou fumage et/ou cuisson et/ou parage et/ou désossage et/ou moulage ou autres, qui permettent de lui conférer les qualités gustatives, l'aspect et la forme générale appropriés à sa consommation. Ensuite, le jambon est généralement conditionné sous vide ou sous film cellulosique ou autre.

Le problème principal posé par ces produits carnés ayant subi des étapes de préparation préalables tient au fait qu'ils ont par eux-mêmes généralement une mauvaise tenue, et qu'ils sont extrêmement sensibles aux conditions dans lesquelles ils sont stockés ou conservés.

Ce problème se pose de façon accrue sur les lieux de vente à la découpe pour des produits se présentant sous forme de bloc à trancher progressivement tels que les jambons. En effet, les jambons secs sont délicats à conserver. Il est donc nécessaire de les laisser au maximum entourés de leur couenne d'origine. Lorsqu'on les tranche, on doit alors les découenner progressivement, ce qui exige un tour de main qui n'est maîtrisé que par les seuls charcutiers formés à cet effet. Enfin, la seule couenne du jambon ne suffit pas toujours à assurer une bonne tenue au tranchage, ni même une bonne conservation, que ce soit à l'état conditionné ou lors de la vente à la découpe ou de la consommation.

On connaît du document BE-A- 461 975 un produit consistant de viande dont la surface est débarassée de microbes et pourvue d'un enduit de matière stérilisée contenant un agent de conservation. Cette matière comprend de la cire. Selon un procédé de ce document on refroidit la viande en empêchant sa contamination, on y applique l'enduit et on refroidit le produit. Le document US-A- 2 337 666 décrit également un enrobage de cire pour jambon, en vue d'assurer leur protection. Toutefois un réel problème se pose non seulement lors de l'enrobage avec la cire, compte tenu de la tenue du jambon, mais aussi lors de l'utilisation. En effet, ces documents ne prévoient pas la possibilité de débarasser le jambon progressivement de son enrobage de cire.

On connaît aussi des fromages que l'on enrobe de façon à éviter la formation d'une croûte, à améliorer leur présentation et à favoriser leur conservation. Cependant, les problèmes qui se posent pour ces fromages sont différents de ceux posés par les produits carnés et les technologies fromagères ne sont pas applicables par exemple à la préparation des jambons ou autres produits carnés (voir document FR-A-1 494 940).

L'invention vise à remédier aux inconvénients précités des procédés connus de préparation de produits carnés, et a pour but général de proposer un procédé de préparation qui procure un produit carné facile à manipuler et à consommer, notamment sous forme de tranches, et dont la conservation est améliorée, que ce soit à l'état conditionné ou lors de sa consommation.

Plus précisément, l'invention a pour objectif de procurer un produit alimentaire carné, notamment un jambon sec, formé, salé ou cuit, qui peut être tranché selon la demande immédiatement, sans opération préalable nécessitant un tour de main ou susceptible d'être dangereux, dans des conditions de propreté et d'hygiène accrues, le tranchage fournissant des tranches parfaites et esthétiques ayant une bonne tenue. Un autre objectif de l'invention est, simultanément à l'objectif précédent, d'améliorer la conservation d'un tel produit, lorsqu'il est conditionné et emballé (par exemple sous vide) mais aussi lorsqu'il est sorti de son emballage et entamé.

L'invention propose donc un procédé de préparation d'un produit alimentaire carné -notamment d'un jambon sec, fumé, salé ou cuit- se présentant sous forme de bloc à trancher progressivement, comprenant une série d'étapes préalables de malaxage et/ou salage et/ou dessalage et/ou étuvage et/ou séchage et/ou fumage et/ou cuisson et/ou parage et/ou désossage et/ou moulage ou autres permettant notamment de lui conférer les qualités gustatives, l'aspect, et la forme générale appropriés à sa consommation.

Selon une première caractéristique de l'invention, après ces étapes de préparation préalables , et avant l'étape de conditionnement définitif, on effectue une étape de finition dans laquelle on enrobe le produit alimentaire d'un revêtement après avoir entouré sa surface extérieure de moyens allongés -notamment filiformes- de découpage de ce revêtement, les moyens allongés de découpage s'étendant sensiblement parallèlement au plan de tranchage du produit et permettant d'ôter le revêtement du produit au fur et à mesure de sa consommation.

Selon une autre caractéristique de l'invention, après ces étapes de préparation , et avant l'étape de conditionnement définitif, on effectue une étape de finition dans laquelle on refroidit le produit alimentaire en surface et à coeur, puis on le plonge au moins une fois dans un bain de matière liquide à haute température telle que la cire fondue ou autre matière équivalente fondue dont on enrobe le produit, et qui forme en se refroidissant un revêtement rigide qui enrobe le produit alimentaire ; et en ce que l'on ôte la matière naturelle non consommable recouvrant le produit alimentaire et gênant son tranchage ou nuisant à sa présentation, notamment la couenne, l'excédent de graisse, la peau ..., avant d'enrober le produit avec la matière.

Le produit carné ainsi préparé a une tenue parfaite lors du tranchage grâce au revêtement qui le maintient. De plus, la présentation et l'aspect des tranches formées sont excellents. Les manipulations du produit protégé par le revêtement n'exigent aucune précaution particulière et se font dans des conditions d'hygiène et de propreté meilleure que celles des produits de l'art antérieur. Enfin, la conservation du produit est grandement améliorée, que ce soit lorsqu'il est conditionné ou même lorsqu'il est entouré, grâce au revêtement qui le protège, et à la pasteurisation effectuée lors du bain à haute température.

D'autres caractéristiques et avantages de l'invention apparaîtront à la lecture de la description suivante des modes de réalisation préférentiels illustrés par les figures annexées dans lesquelles :

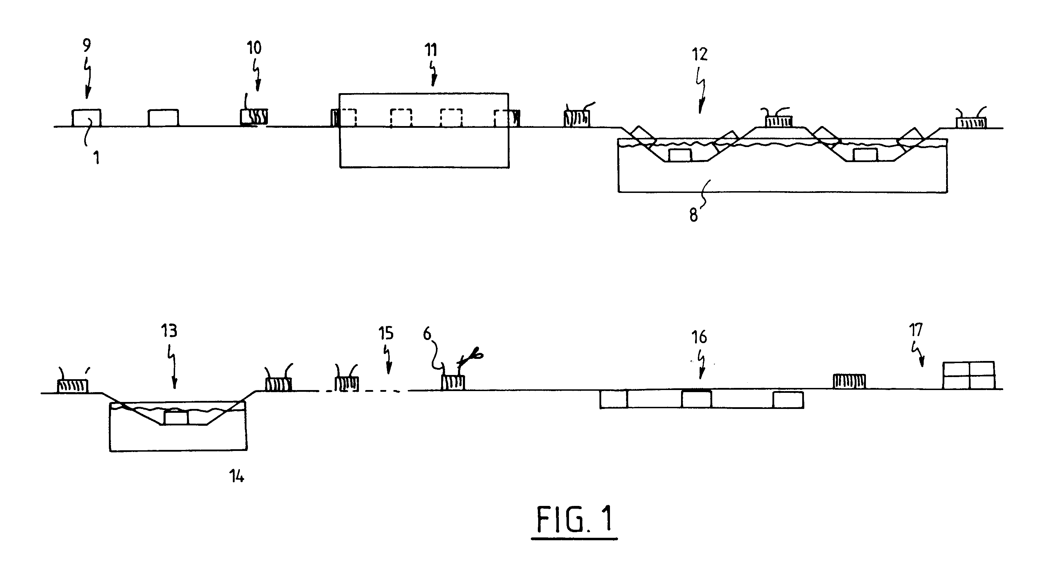

. la figure 1 est une vue schématique illustrant les différentes étapes de fonction et de conditionnement d'un procédé de préparation selon l'invention.

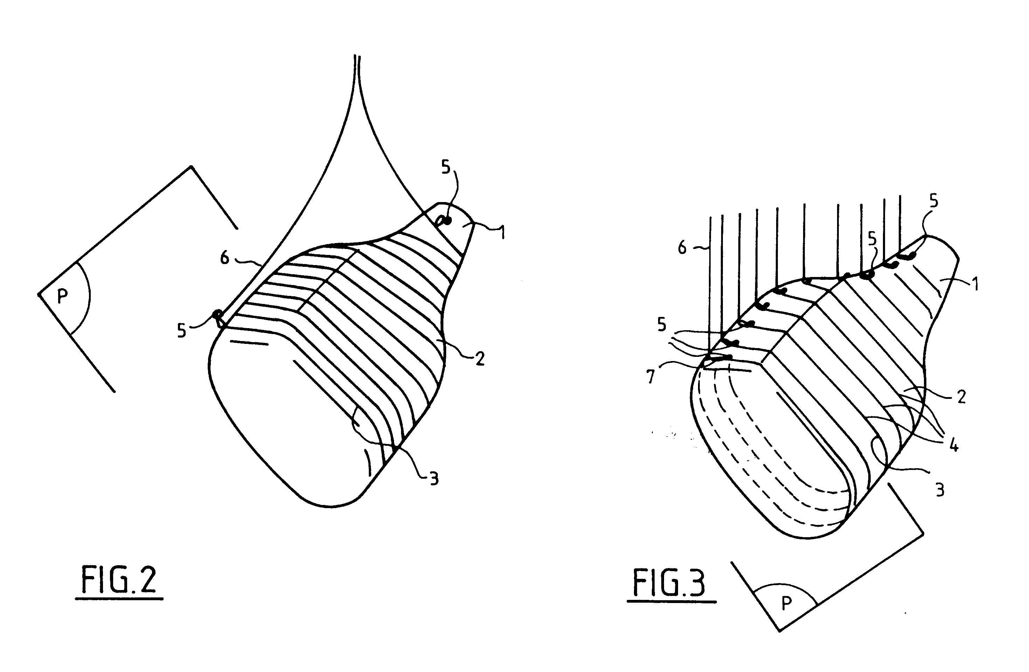

. la figure 2 est une vue schématique en perspective illustrant un premier mode possible de disposition des moyens de découpage autour d'un produit, dans un procédé de préparation selon l'invention.

. la figure 3 est une vue schématique en perspective illustrant un second mode possible de disposition des moyens de découpage autour d'un produit, dans un procédé de préparation selon l'invention.

L'invention concerne un procédé de préparation d'un produit alimentaire carné 1 tel qu'un jambon sec, fumé, salé ou cuit, notamment se présentant sous forme de bloc à trancher progressivement selon un plan de tranchage P généralement sensiblement perpendiculaire à une direction longitudinale du produit 1.

Dans un procédé de préparation d'un tel produit 1, on fait subir tout d'abord au produit 1 une série d'étapes préalables de préparation proprement dites permettant notamment de lui conférer les qualités gustatives, l'aspect et la forme générale appropriés à sa consommation. Ces étapes préalables, connues en soi, ne sont pas représentées et varient selon les caractéristiques et la nature du produit que l'on désire obtenir et selon la qualité du produit de départ. Il s'agit par exemple d'étapes de malaxage et/ou salage et/ou dessalage et/ou étuvage et/ou séchage et/ou fumage et/ou cuisson et/ou parage et/ou désossage et/ou moulage, ou autres.

Dans un procédé de préparation selon l'invention, après ces étapes de préparation préalables proprement dites, et avant l'étape de conditionnement définitive, on effectue une étape de finition dans laquelle on enrobe le produit alimentaire 1 d'un revêtement rigide qui en épouse les contours extérieurs, de façon à en améliorer et à en faciliter le tranchage et les manipulations.

Selon une caractéristique de l'invention indépendante de la précédente, après les étapes de préparation préalables proprement dites, et avant l'étape de conditionnement définitive, on effectue une étape de finition dans laquelle on enrobe le produit alimentaire 1 d'un révêtement après avoir entouré sa surface extérieure de moyens 3 allongés -notamment filiformes- de découpage de ce revêtement, les moyens 3 allongés de découpage s'étendant sensiblement parallèlement au plan P de tranchage du produit 1, et permettant d'ôter le revêtement du produit 1 au fur et à mesure de sa consommation.

Le revêtement est donc déposé sur le produit alimentaire après que les moyens allongés de découpage le soient et recouvre donc ces moyens allongés de découpage. De préférence, le revêtement qui recouvre les moyens allongés de découpage est un revêtement rigide qui épouse les contours extérieurs du produit 1 de façon à améliorer et à faciliter le tranchage et les manipulations.

Dans une première variante représentée en figure 2, les moyens 3 allongés de découpage sont constitués d'une ficelle, bandelette ou équivalent, enroulée serrée en spirale autour du produit 1, de façon à découper le revêtement et à faciliter son enlèvement au fur et à mesure du tranchage du produit 1. Dans une seconde variante représentée en figure 3, les moyens 3 allongés de découpage sont constitués d'une pluralité de boucles 4, de ficelles, bandelettes ou équivalent, sensiblement parallèles les unes aux autres et espacées, notamment régulièrement espacées, les unes des autres, et serrées autour du produit 1.

Selon l'invention, on fixe au moins un organe d'arrachement 5, notamment sous forme d'une pastille, à chaque partie indépendante des moyens 3 allongés de découpage. Les dimensions et la forme de cet organe d'arrachement 5 sont telles qu'il fait saillie à l'extérieur du revêtement et permet de repérer l'extrémité libre 6 des moyens 3 allongés pour commencer le découpage du revêtement, tout en garantissant son intégrité. Dans la première variante, on fixe un organe d'arrachement tel qu'une pastille 5 au voisinage de chacune des extrémités libres de la ficelle 3 enroulée en spirale autour du produit 1. On peut alors commencer à découper le revêtement en tirant sur l'une de ces pastilles, ce qui a pour effet de découper proprement le revêtement, et de permettre son enlèvement pour dégager une partie du produit qui se trouve alors prête à être tranchée. Dans la seconde variante, on prévoit un organe d'arrachement 5 tel qu'une pastille pour chacune des boucles 4 de ficelle. Par exemple, une des extrémités 6 de la ficelle comporte une petite boucle 7 à laquelle est associée la pastille 5. La ficelle fait le tour du produit 1, et l'autre extrémité 6 de cette ficelle est engagée dans la petite boucle 7 pour former la boucle 4 de ficelle autour du produit 1. Pour découper le revêtement qui recouvre ces boucles 4 de ficelle et le produit 1, il suffit de tirer la pastille 5, ce qui a pour effet d'accéder à la ficelle formant une boucle 4, puis de tirer sur cette ficelle pour découper proprement le revêtement et dégager ainsi une partie de produit à trancher.

De préférence, on enrobe le produit 1 d'un revêtement étanche au moins à l'air et/ou à l'eau et/ou à la vapeur d'eau. Le revêtement forme également avantageusement isolant thermique.

Selon une autre caractéristique indépendante de l'invention, après les étapes de préparation préalables proprement dites, et avant l'étape de conditionnement définitive, on effectue une étape de finition dans laquelle on enrobe le produit alimentaire 1 d'un revêtement de cire ou autre matière équivalente.

Selon une autre caractéristique indépendante de l'invention, après les étapes de préparation préalables proprement dites, et avant l'étape de conditionnement définitif, on effectue une étape de finition dans laquelle on refroidit le produit alimentaire 1 en surface et à coeur, puis on le plonge au moins une fois dans un bain de matière liquide 8 à haute température.

Le bain de matière liquide 8 à haute température est de préférence un bain de cire fondue ou autre matière équivalente fondue dont on enrobe le produit 1. Avantageusement, la matière liquide 8 est telle qu'elle forme en se refroidissant un revêtement rigide qui enrobe le produit alimentaire 1.

De préférence, on refroidit le produit alimentaire 1 à moins de 5° C, notamment à une température de l'ordre de 0° C en surface et 3° C: à coeur. La température du bain de matière liquide 8 est préférentiellement supérieure ou égale à 50° C, notamment comprise entre 85° C et 90° C. Le fait de refroidir le produit 1 puis de le plonger dans un bain de matière liquide chaude, permet, d'une part d'éviter que le revêtement ainsi formé n'adhère définitivement au produit 1, et donc de faciliter son enlèvement ultérieur, et, d'autre part, conduit à une pasteurisation en surface du produit 1. On a ainsi constaté que le produit 1 ainsi traité se conserve beaucoup plus longtemps et beaucoup mieux que dans l'art antérieur.

De préférence, on plonge le produit alimentaire 1 successivement plusieurs fois dans le bain de matière fondue 8 ou dans plusieurs bains dictincts de matières distinctes. Cela permet de réaliser un revêtement mieux fini et parfaitement adapté à l'utilisation que l'on veut en faire. De préférence, on laisse refroidir le produit alimentaire 1 ou on lui impose un refroidissement entre chacun des bains.

Bien entendu, les différentes caractéristiques indépendantes précitées de l'invention pourront être combinées entre elles. Par exemple, avant de plonger le produit 1 dans un bain de matières liquides à haute température, et même avant de le refroidir, on peut entourer la surface extérieure du produit 1 de moyens 3 allongés -notamment filiformes- de découpage du revêtement qui sera ultérieurement formé par le trempage du produit 1 dans les différents bains de matière liquide à haute température 8, les moyens allongés de découpage s'étendant sensiblement parallèlement au plan de tranchage du produit, et permettant d'ôter le revêtement du produit 1 au fur et à mesure de sa consommation.

Selon une caractéristique importante de l'invention, on ôte la matière naturelle non consommable recouvrant le produit alimentaire 1 et gênant son tranchage ou nuisant à sa présentation, notamment la couenne, l'excédent de graisse, la peau ..., avant d'enrober le produit 1 de revêtement, notamment avant de l'entourer des moyens 3 allongés de découpage de ce revêtement. Dans le cas de jambon sec, l'étape de finition selon l'invention débute donc par un découennage, qui peut être réalisé de façon automatique et industrielle de ce jambon.

Après avoir passé le produit 1 dans les différents bains de matière liquide 8 à haute température, on refroidit ultérieurement le produit alimentaire 1 ainsi enrobé, notamment par une trempe à l'eau fraîche.

Avantageusement, l'épaisseur du revêtement est comprise entre 1,5 mm et 3,5 mm, notamment de l'ordre de 2 à 3 mm . Par ailleurs, les différents bains successifs dans lesquels on plonge le produit 1, et les caractéristiques de la matière employée pour le revêtement peuvent être choisies d'une façon telle que l'on enrobe le produit alimentaire 1 d'un revêtement dont la teinte est celle du produit à l'état naturel après une préparation traditionnelle. Ainsi, dans le cas de jambon sec, la teinte de la cire pourra être choisie de façon que le jambon enrobé ait une couleur paille se rapprochant de la couleur de la couenne.

Dans un procédé selon l'invention, le produit 1 ayant subi l'étape de finition est ensuite conditionné sous vide et/ou emballé pour son expédition.

L'invention est avantageusement applicable à la préparation de jambons secs ou de portions de jambons secs. Dans ce cas, le jambon est préalablement séché selon un procédé connu. Par exemple, ce séchage comporte un ou plusieurs salages avec repos en saloir, un déssalage suivi d'un parage autour de la tête de fémur, une phase de repos, un lavage et un étuvage, suivi d'une longue période de séchage, puis enfin, d'un panage et d'un affinage. A la suite de ce séchage, le jambon est généralement désossé selon un procédé industriel connu qui permet d'extraire le quasi, le fémur, le tibia et le péroné. A la suite du désossage, le jambon est cousu au niveau de l'ouverture nécessaire pour extraire les os et disposé dans un moule dans lequel il est pressé pour lui donner une forme régulière. Le jambon sec recousu et moulé est alors dit "reconstitué". Un tel jambon reconstitué peut être utilisé soit entier, soit portionné. C'est dans cet état que commence l'étape de finition selon l'invention qui est représentée en figure 1, qui représente de gauche à droite et de bas en haut chronologiquement les opérations que l'on fait subir au jambon reconstitué désigné par la référence 9.

Le jambon est préalablement ficelé en 10, soit en spirales, soit par une pluralité de boucles successives parallèles, distantes les unes des autres, comme représenté sur les figures 2 et 3. Ce ficelage peut être réalisé soit de façon automatique, soit manuellement. Il permet de réaliser les moyens 3 allongés de découpage du revêtement déposé ultérieurement. A la suite de ce ficelage 10, le jambon est refroidi en 11 par un séjour d'une demi-heure environ dans une enceinte à - 18° C permettant un refroidissement en surface de l'ordre de 0° C et à coeur de l'ordre de 3° C. Le jambon ficelé et refroidi est alors plongé en 12 dans un bain de cire fondue 8 maintenu à une température de 85 à 90° C dans une cuve chauffante thermostatée. De préférence, le jambon préalablement refroidi est plongé plusieurs fois dans le bain de cire 8, de sorte qu'il est enrobé par dépôts successifs de couches de cire. Sur la figure 1, on a représenté le cas d'un procédé de préparation dans lequel on plonge le jambon deux fois dans le bain de cire.

On peut faire varier l'épaisseur de la couche de cire enrobant le jambon en chargeant le nombre des bains de cire, la température du bain de cire, et la température à la surface du jambon. Plus la température de la cire est élevée, plus mince est la couche déposée à chaque bain. Plus la température à la surface du jambon est basse, plus épaisse est la couche déposée à chaque bain. Par ailleurs, le fait de refroidir très fortement la surface des jambons à environ 0° C permet d'éviter l'adhérence de la couche de cire à la surface du jambon. En pratique, pour une température de surface du jambon d'environ 0° C, et une température à coeur du jambon d'environ 3° C, pour une température de la cire fondu de 85 à 90° C, et pour un nombre de bains compris entre deux et trois, l'épaisseur du revêtement formé autour du jambon est de l'ordre de 2 à 3 mm.

Dans le cas de jambons secs, le bain de cire 8 est constitué d'un mélange de cires de différentes couleurs pour obtenir une couleur paille se rapprochant de la couleur de la couenne. Par exemple, on pourra mélanger de la cire marron et de la cire jaune en quantités égales, avec un peu de cire noire.

Après avoir plongé le jambon dans le dernier bain de cire 8, on le trempe en 13 dans un bain d'eau fraîche 14, afin de refroidir le revêtement de cire et d'assurer sa consistance. Le revêtement enrobe alors totalement le jambon. Seules les extrémités 6 des ficelles de découpage et les organes d'arrachement 5 font saillie hors du revêtement. On coupe alors en 15 le surplus de ficelles des extrémités libres 6, pour ne laisser apparentes que les pastilles d'arrachement 5.

Le produit est ensuite mis sous vide en 16, puis est emballé en 17 de façons connues.

Le produit 1 préparé par un procédé de préparation selon l'invention est donc entièrement enrobé de cire, et une ficelle permet d'ôter la cire progressivement au fur et à mesure de la consommation du produit. Ce produit peut être, par exemple, un jambon sec désossé, découenné ou non, et moulé, entier ou en portions, de forme traditionnelle ou en pavé. Le produit 1 obtenu par un procédé de préparation de l'invention est conditionné sous vide, ce qui limite l'oxydation et la dessiccation, ainsi que la multiplication de flore à sa surface. De plus, le produit 1 est maintenu compact sous l'effet du vide.

La cire doit être choisie de sorte qu'elle ne soit pas collante lors de la coupe par l'utilisateur, qu'elle soit non cassante lors du stockage du jambon à froid, qu'elle puisse être ôtée du produit sans difficulté et n'adhère pas à ce produit, et qu'elle soit compatible avec son utilisation sur un produit alimentaire, c'est-à-dire ne contienne pas de substances toxiques.

Outre son application préférentielle et la préparation de jambons secs décrite préalablement à titre d'exemple, l'invention est aussi applicable à la préparation d'autres produits carnés pour lesquels le même type de problème se pose. De plus, un procédé de préparation selon l'invention peut être mis en oeuvre soit de façon artisanale, soit de façon industrielle. Elle procure cependant le maximum d'avantages lors de son application à la préparation de jambons secs, de façon industrielle et en série.

## Revendications

**1.** Procédé de préparation d'un produit alimentaire carné -notamment d'un jambon sec, fumé, salé ou cuit-, se présentant sous forme de bloc à trancher progressivement, comprenant une série d'étapes préalables de malaxage et/ou déssalage et/ou étuvage et/ou séchage et/ou fumage et/ou cuisson et/ou parage et/ou désossage et/ou moulage ou autres permettant notamment de lui conférer les qualités gustatives, l'aspect et la forme générale appropriés à sa consommation, caractérisé en ce que, après ces étapes de préparation préalables, et avant l'étape de conditionnement définitif, on effectue une étape de finition dans laquelle on enrobe le produit alimentaire (1) d'un revêtement après avoir entouré sa surface extérieure (2) de moyens (3) allongés -notamment filiformes- de découpage de ce revêtement, les moyens (3) allongés de découpage s'étendant sensiblement parallèlement au plan de tranchage du produit (1) et permettant d'ôter le revêtement du produit (1) au fur et à mesure de sa consommation.

**2.** Procédé selon la revendication 1, caractérisé en ce qu'on enrobe le produit alimentaire (1) d'un revêtement rigide qui en épouse les contours extérieurs de façon à améliorer et à faciliter le tranchage et les manipulations.

**3.** Procédé selon l'une quelconque des revendications 1 et 2, caractérisé en ce que les moyens (3) allongés de découpage sont constitués d'une ficelle, bandelettes ou équivalent, enroulée serrée en spirale autour du produit (1) de façon à découper le revêtement et à faciliter son enlèvement au fur et à mesure du tranchage du produit (1).

**4.** Procédé selon l'une quelconque des revendications 1 et 2, caractérisé en ce que les moyens (3) allongés de découpage sont constitués d'une pluralité de boucles (4) de ficelle, bandelettes ou équivalent, sensiblement parallèles les unes aux autres et espacées, notamment régulièrement espacées, les unes des autres, et serrées autour du produit.

**5.** Procédé selon l'une quelconque des revendications 1 à 4, caractérisé en ce que l'on fixe au moins un organe d'arrachement (5), notamment une pastille, à chaque partie indépendante des moyens (3) allongés de découpage, dont les dimensions et la forme sont telles qu'il fait saillie à l'extérieur du revêtement et permet de repérer l'extrémité libre (6) des moyens (3) allongés pour commencer le découpage du revêtement, tout en garantissant son intégrité.

**6.** Procédé selon l'une quelconque des revendications 1 à 5, caractérisé en ce que l'on enrobe le produit (1) d'un revêtement étanche au moins à l'air et/ou à l'eau et/ou à la vapeur d'eau.

**7.** Procédé selon l'une quelconque des revendications 1 à 6, caractérisé en ce que l'on enrobe le produit (1) d'un revêtement formant isolant thermique.

**8.** Procédé selon l'une quelconque des revendications 1 à 7, caractérisé en ce qu'on enrobe le produit alimentaire (1) d'un revêtement de cire ou autre matière équivalente.

**9.** Procédé selon l'une quelconque des revendications 1 à 8, caractérisé en ce que l'on refroidit le produit alimentaire (1) en surface et à coeur, puis on le plonge au moins une fois dans un bain de matière liquide (8) à haute température telle que la cire fondue ou autre matière équivalente fondue dont on enrobe le produit (1), et qui forme en se refroidissant un revêtement rigide qui enrobe le produit alimentaire (1) ; et en ce que l'on ôte la matière naturelle non consommable recouvrant le produit alimentaire (1) et gênant son tranchage ou nuisant à sa présentation, notamment la couenne, l'excédent de graisse, la peau ..., avant d'enrober le produit (1) avec la matière (8).

**10.** Procédé selon la revendication 9, caractérisé en ce que l'on refroidit le produit alimentaire (1) à moins de 5° C, notamment à une température de l'ordre de 0° C en surface et 3° C à coeur.

**11.** Procédé selon l'une quelconque des revendications 9 et 10, caractérisé en ce que la température du bain de matière liquide (8) est comprise entre 85° C et 90° C.

**12.** Procédé selon l'une quelconque des revendications 9 à 11, caractérisé en ce que l'on plonge le produit alimentaire (1) successivement plusieurs fois dans le bain de matière chaude (8), ou dans plusieurs bains de matière distincte et on laisse refroidir le produit alimentaire (1), ou on lui impose un refroidissement entre chaque bain.

**13.** Procédé selon l'une quelconque des revendications 9 à 12, caractérisé en ce que l'on refroidit ultérieurement le produit alimentaire (1) ainsi enrobé, notamment par une trempe à l'eau fraîche.

**14.** Procédé selon l'une quelconque des revendications 1 à 13, caractérisé en ce que l'on enrobe le produit (1) d'un revêtement ayant une épaisseur comprise entre 1,5 mm et 3,5 mm, notamment de l'ordre de 2 à 3 mm.

**15.** Procédé selon l'une quelconque des revendications 1 à 14, caractérisé en ce que l'on enrobe le produit alimentaire (1) d'un revêtement dont la teinte est celle du produit (1) à l'état naturel après une préparation traditionnelle.

## Claims

**1.** A method of preparing a meat food product - in particular a dry, smoked, salted, or cooked ham -, the product being in the form of a block for slicing progressively, the method comprising a series of prior steps of kneading and/or soaking and/or braising and/or drying and/or smoking and/or cooking and/or trimming and/or boning and/or molding, etc., serving in particular to confer taste, appearance, and general shape qualities on the product appropriate for consumption thereof, the method being characterized in that following said prior preparation steps and before a final packaging step, a finishing step is performed in which the food product (1) is coated with a coating after surrounding its outside surface (2) with elongate - in particular thread-like - means (3) for cutting said coating, the elongate coating-cutting means (3) extending substantially parallel to the plane on which the product (1) is to be sliced, and enabling the coating of the product (1) to be removed progressively as the product is consumed.

**2.** A method according to claim 1, characterized in that the food product (1) is coated with a rigid coating which fits closely over the outline thereof so as to facilitate and improve slicing and handling.

**3.** A method according to claim 1 or 2, characterized in that the elongate coating-cutting means (3) are constituted by a string, a narrow band, or the equivalent, tightly spiralled around the product (1) so as to cut through the coating and facilitate removal thereof progressively as the product is sliced.

**4.** A method according to claim 1 or 2, characterized in that the elongate coating-cutting means (3) are constituted by a plurality of loops (4) of string, narrow bands, or the equivalent, substantially parallel to one another and spaced apart from one another, in particular regularly spaced apart, and tightened around the product.

**5.** A method according to any one of claims 1 to 4, characterized in that at least one pull member (5), in particular a pellet, is fixed to each independent portion of the elongate coating-cutting means (3), the shape and size thereof being such as to cause it to project outside the coating and to enable the free end (6) of the elongate means (3) to be identified to begin cutting through the coating, while guaranteeing the integrity thereof.

**6.** A method according to any one of claims 1 to 5, characterized in that the product (1) is coated with a coating that is proof at least against air and/or water and/or water vapor.

**7.** A method according to any one of claims 1 to 6, characterized in that the product (1) is coated with a coating that forms a thermal insulator.

**8.** A method according to any one of claims 1 to 7, characterized in that the food product (1) is coated with a coating of wax or other equivalent material.

**9.** A method according to any one of claims 1 to 8, characterized in that the food product (1) is cooled on its surface and to its core, is then dipped at least once in a bath of liquid material (8) at high temperature such as molten wax or other equivalent molten material, with which the product (1) is coated, and which on cooling forms a rigid coating that coats the food product (1); and in that the natural non-edible material covering the food product (1) and impeding slicing thereof or spoiling its appearance, in particular rind, excess fat, skin, ..., is removed before the product (1) is coated with the material (8).

**10.** A method according to claim 9, characterized in that the food product (1) is cooled at least to 5°C, and in particular to a temperature of about 0°C on the surface and 3°C in its core.

**11.** A method according to claim 9 or 10, characterized in that the temperature of the bath of liquid material (8) lies in the range 85°C to 90°C.

**12.** A method according to any one of claims 9 to 11, characterized in that the food product (1) is dipped successively a plurality of times into the bath of hot material (8) or into a plurality of distinct baths of material, and the food product (1) is allowed to cool or is subjected to cooling between each bath.

**13.** A method according to any one of claims 9 to 12, characterized in that the food product (1) coated in this way is subsequently cooled, in particular by being quenched in cold water.

**14.** A method according to any one of claims 1 to 13, characterized in that the product (1) is coated with a coating whose thickness lies in the range 1.5 mm to 3.5 mm, and in particular about 2 mm to 3 mm.

**15.** A method according to any one of claims 1 to 14, characterized in that the food product (1) is coated with a coating whose color is the same as that of the product (1) in the natural state after being prepared in traditional manner.

**Patentansprüche**

**1.** Verfahren zum Herstellen eines Fleischnahrungsmittelproduktes, insbesondere eines getrockneten, geräucherten, gesalzten oder gekochten Schinkens, in Form eines scheibenweise abzuschneidenden Blockes, mit einer Reihe von vorhergehenden Schritten des Anfeuchtens und/oder Entsalzens und/oder Trocknens durch Erwärmen und/oder passiven Trocknens und/oder Räucherns und/oder Kochens und/oder Zurichtens und/oder Entbeinens und/oder Formens oder von anderen Schritten, die dem Produkt insbesondere geschmackliche Qualitäten und ein Aussehen und eine Gesamtform, die zu dessen Verbrauch geeignet sind, verleihen, **dadurch gekennzeichnet**, daß nach diesen Schritten der Vorbehandlung und vor dem Schritt der endgültigen Konditionierung ein Endbearbeitungsschritt durchgeführt wird, bei welchem das Nahrungsmittelprodukt (1) mit einer Hülle überzogen wird, nachdem seine Außenfläche (2) mit einem langgestreckten, insbesondere fadenförmigen Mittel (3) zum Auftrennen dieser Hülle umwickelt worden ist, wobei das langgestreckte Mittel (3) sich im wesentlichen parallel zu einer Schneidebene des Produktes (1) erstreckt und ermöglicht, daß die Hülle des Produktes (1) beim Verzehr nach und nach entfernt werden kann.

**2.** Verfahren nach Anspruch 1, dadurch gekennzeichnet, daß das Nahrungsmittelprodukt (1) mit einer starren Hülle überzogen wird, die sich an die äußeren Konturen derart anpaßt, daß das schneiden und die Handhabung verbessert und erleichtert werden.

**3.** Verfahren nach Anspruch 1 oder 2, dadurch gekennzeichnet, daß das langgestreckte Mittel (3) zum Auftrennen durch einen Bindfaden, Bänder o.dgl. gebildet ist, das spiralig um das Produkt (1) geschnürt gewickelt ist, derart, daß die Hülle aufzutrennen ist und deren Abheben nach und nach beim Schneiden des Produktes (1) erleichtert ist.

**4.** Verfahren nach Anspruch 1 oder 2, dadurch gekennzeichnet, daß das langgestreckte Mittel (3) zum Auftrennen durch eine Vielzahl von Schlingen (4) aus Bindfaden, Bändern o.dgl. gebildet ist, die im wesentlichen parallel zueinander und in insbesondere regelmäßigen Abständen zueinander und um das Produkt geschnürt angeordnet sind.

**5.** Verfahren nach einem der Ansprüche 1 bis 4, dadurch gekennzeichnet, daß mindestens ein Aufreißelement (5), insbesondere ein knotenartiges Teil an jedem einzelnen Teilstück des langgestreckten Mittels (3) zum Auftrennen befestigt ist, dessen Abmessungen und Form derart sind, daß es nach außerhalb der Hülle absteht und das Erfassen des freien Endes (6) des langgestreckten Mittels (3) ermöglicht, um das Auftrennen der Hülle zu beginnen, wobei deren Einheit gewahrt bleibt.

**6.** Verfahren nach einem der Ansprüche 1 bis 5, dadurch gekennzeichnet, daß das Produkt (1) mit einer zumindest luftdichten und/oder wasserdichten und/oder wasserdampfdichten Hülle überzogen wird.

**7.** Verfahren nach einem der Ansprüche 1 bis 6, dadurch gekennzeichnet, daß das Produkt (1) mit einer thermisch isolierenden Hülle überzogen wird.

**8.** Verfahren nach einem der Ansprüche 1 bis 7, dadurch gekennzeichnet, daß das Nahrungsmittelprodukt (1) mit einer Hülle aus Wachs o.dgl. äquivalentem Material überzogen wird.

**9.** Verfahren nach einem der Ansprüche 1 bis 8, dadurch gekennzeichnet, daß das Nahrungsmittelprodukt (1) an der Oberfläche und im Innern abgekühlt wird und dann zumindest einmal in ein Bad aus flüssigem Material (8) hoher Temperatur aus bspw. geschmolzenem Wachs oder einem anderen äquivalenten geschmolzenen Material, mit dem das Produkt (1) überzogen wird und das beim Erkalten eine starre Hülle bildet, die das Nahrungsmittelprodukt (1) überzieht, eingetaucht wird, und daß vor dem Überziehen des Produktes (1) mit dem Material (8) der natürliche, nicht verzehrbare Teil, der das Nahrungsmittelprodukt (1) bedeckt und dessen Schneiden behindert oder dessen Aussehen abträglich ist, insbesondere eine Speckschwarte, übermäßiges Fett, Haut u.dgl. entfernt wird.

10. Verfahren nach Anspruch 9, dadurch gekennzeichnet, daß das Nahrungsmittelprodukt (1) zumindest auf 5°C, insbesondere auf eine Temperatur in der Größenordnung von 0°C an der Oberfläche und von 3°C im Innern abgekühlt wird.

11. Verfahren nach Anspruch 9 oder 10, dadurch gekennzeichnet, daS die Temperatur des Bades aus flüssigem Material (8) zwischen 85°C und 90°C beträgt.

12. Verfahren nach einem der Ansprüche 9 bis 11, dadurch gekennzeichnet, daß das Nahrungsmittelprodukt (1) nacheinander mehrmals in das Bad aus heißem Material (8) oder in mehrere Bäder aus unterschiedlichem Material eingetaucht und das Nahrungsmittelprodukt (1) abgekühlt gelassen oder zwischen jedem Bad einer Abkühlung ausgesetzt wird.

13. Verfahren nach einem der Ansprüche 9 bis 12, dadurch gekennzeichnet, daß das so überzogene Nahrungsmittelprodukt (1) insbesondere durch Abschrecken mit kalten Wasser abgekühlt wird.

14. Verfahren nach einem der Ansprüche 1 bis 13, dadurch gekennzeichnet, daß das Produkt (1) mit einer Hülle überzogen wird, die eine Dicke zwischen 1,5 mm und 3,5 mm, insbesondere in der Größenordnung von 2 bis 3 mm besitzt.

15. Verfahren nach einem der Ansprüche 1 bis 14, dadurch gekennzeichnet, daß das Nahrungsmittelprodukt (1) mit einer Hülle überzogen wird, deren Färbung derjenigen des Produktes (1) in natürlichem Zustand nach einer traditionellen Behandlung entspricht.

FIG. 1

FIG.2

FIG.3

EP 0 291 415 B1